(19) Europäisches Patentamt

European Patent Office

Office européen des brevets

(11) Veröffentlichungsnummer: **0 236 812 B1**

## (12) EUROPÄISCHE PATENTSCHRIFT

(45) Veröffentlichungstag der Patentschrift: **10.04.91**

(21) Anmeldenummer: **87102347.9**

(22) Anmeldetag: **19.02.87**

(51) Int. Cl.⁵: **B23Q 3/155**

(54) Werkzeugwagen zur Beschickung von Werkzeugmaschinen.

(30) Priorität: **06.03.86 DE 3607391**

(43) Veröffentlichungstag der Anmeldung:
**16.09.87 Patentblatt 87/38**

(45) Bekanntmachung des Hinweises auf die
Patenterteilung:
**10.04.91 Patentblatt 91/15**

(84) Benannte Vertragsstaaten:
**CH DE FR GB IT LI**

(56) Entgegenhaltungen:
**AT-B- 288 112**
**DE-A- 3 327 512**
**JP-B-53 021 543**
**US-A- 4 547 955**

**PATENT ABSTRACTS OF JAPAN, Band 8, Nr.**
**276 (M-346)[1713], 18. Dezember 1984**

**PATENT ABSTRACTS OF JAPAN, Band 5, Nr.**
**14 (M-52)[686], 28. Januar 1981**

(73) Patentinhaber: **MAHO Aktiengesellschaft**
**Postfach 1280 Tiroler Strasse 85**
**W-8962 Pfronten(DE)**

(72) Erfinder: **Babel, Werner**
**Achweg 19**
**W-8962 Pfronten-Meilingen(DE)**
Erfinder: **Schwarz, Walter**
**Auf der Herze 1**
**W-8962 Pfronten(DE)**

(74) Vertreter: **Patentanwälte Beetz sen. - Beetz**
**jun. Timpe - Siegfried - Schmitt-Fumian**
**Steinsdorfstrasse 10**
**W-8000 München 22(DE)**

**Beschreibung**

Die Erfindung betrifft einen Werkzeugwagen der im Oberbegriff des Patentanspruchs 1 angegebenen Gattung.

Bei herkömmlichen numerisch gesteuerten Werkzeugmaschinen und Bearbeitungszentren werden die Werkzeuge in die maschineneigenen Magazine in der Regel von Hand eingesetzt bzw. ausgewechselt. Wenn mehrere Werkzeugmaschinen nacheinander mit neuen Werkzeugen bestückt werden sollen, können Schiebekarren verwendet werden, auf denen die jeweiligen Werkzeuge geordnet abgelegt sind. Diese Prozedur der Werkzeugbeschickung der Magazine mehrerer Werkzeugmaschinen ist umständlich und zeitaufwendig, da alle wesentlichen Vorgänge manuell ausgeführt werden müssen.

Gemäß der JP-A-59 146 727 besteht die Möglichkeit, die Werkzeuge vom Schiebekarren zum Werkzeugmagazin durch stationäre Werkzeugwechsler zu übergeben.

Aus der DE-A-33 31 293 ist eine Werkzeugwechselvorrichtung für eine Werkzeugmaschine mit Werkzeug-Hauptmagazin bekannt, bei welcher ein Werkzeugwagen ein gleisgebundenes mehrspuriges Fahrgestell und eine darauf befestigte plattenförmige Tragkonstruktion aufweist. An dieser Tragkonstruktion ist um eine horizontale Achse verdrehbar ein Tellermagazin angeordnet, das eine Vielzahl von Werkzeug-Kartuschen mit jeweils mehreren Werkzeugen enthält. Am Ständer jeder Werkzeugmaschine befindet sich ein Werkzeugwechsler, welcher die Übergabe der einzelnen Kartuschen aus dem Tellermagazin des Werkzeugwagens in das maschineneigene Tellermagazin übernimmt. Bei diesem bekannten System ergeben sich Schwierigkeiten bezüglich der genauen Positionierung der einzelnen Werkzeug-Kartuschen in der Wechselposition, da das einen Werkzeugspeicher bildende Tellermagazin des Werkzeugwagens lediglich um seine zentrale Welle verdreht, nicht jedoch in der Höhe oder seitlich genau positioniert werden kann. Die Anordnung der einzelnen Werkzeugwechsler an den jeweiligen Werkzeugmaschinen erfordert einen relativ hohen technischen Aufwand und einen zusätzlichen Raum.

Aus der DE-A-33 27 512 von der der oberbegriff des Patentanspruchs 1 ausgeht, ist eine automatische Werkzeugwechselvorrichtung für eine Werkzeugmaschine bekannt, bei welcher an der vertikalen Seitenwand einer auf einem Fahrgestell horizontal verschiebbar angeordneten Tragkonstruktion ein Drehkopf montiert ist, der eine begrenzte Anzahl an Werkzeugaufnahmen aufweist. Jede Werkzeugaufnahme ist mittels eines Zylinders radial verschiebbar am Drehkopf montiert und bildet einen einzeln betätigbaren Werkzeugwechsler. Da die maximale Anzahl an auszuwechselnden Werkzeugen begrenzt ist, kann diese Werkzeugwechselvorrichtung zur Bedienung mehrerer Bearbeitungszentren nur mit praktisch nicht akzeptablem Aufwand eingesetzt werden.

Weitere Werkzeug-Beschickungssysteme für programmgesteuerte Werkzeugmaschinen sind z. B. aus der AT-PS 288 112 bekannt.

Aufgabe der Erfindung ist es, die Beschickung der Werkzeugmagazine von numerisch gesteuerten Werkzeugmaschinen auch unterschiedlicher Typen so zu automatisieren, daß die einzelnen Vorgänge ohne übermäßigen konstruktiven und steuertechnischen Aufwand programmgesteuert ablaufen können.

Diese Aufgabe wird erfindungsgemäß durch die Merkmale des Patentanspruchs 1 gelöst.

Der Werkzeugwagen kann auf Schienen oder auch als Teil eines flexiblen Flurfördersystems durch im Boden verlegte Induktionsschleifen gesteuert mit Hilfe seines eigenen Fahrantriebs in genau festgelegte Positionen hinter oder neben der jeweiligen Werkzeugmaschine fahren. Optische Sensoren und/oder Endschalter sowie gesonderte Positioniereinrichtungen können den jeweiligen Wagen in der vorgegebenen Wechselstellung genau ausrichten und gegen willkürliche Bewegungen sichern. Durch die programmgesteuerte Betätigung des Werkzeugspeichers wird ein bestimmtes Werkzeug in die definierte Wechselstellung im Zugriffsbereich des Werkzeugwechslers gebracht, woraufhin der Werkzeugwechsler so weit ausfährt, daß seine Greifer dieses Werkzeug aus dem Speicher herausziehen und ggf. nach einer Schwenkbewegung um 180° während der Rückzugsbewegung in die vorgesehene leere Werkzeugaufnahme des maschineneigenen Werkzeugmagazins einsetzt.

Um unterschiedliche Werkzeugmaschinen-Typen nacheinander anfahren und mit Werkzeugen beschicken zu können, ist gemäß der Erfindung der Werkzeugspeicher und der Werkzeugwechsler an einem Schlitten montiert, der am Fahrgestell des Werkzeugwagens zumindestens in einer Achse verschiebbar angeordnet ist. An diesem Schlitten können verschiedene Speichertypen angeordnet werden.

Besonders zweckmäßig ist die Verwendung eines sog. Kettenmagazins, dessen Endloskette in mehreren Schleifen an einer Seitenwand des in Form einer hochkant stehenden Platte ausgebildeten Schlittens um eine entsprechende Anzahl von Kettenrädern geführt ist. Kettenspeicher sind zwar relativ kostenaufwendig, haben aber den Vorteil, daß sie eine besonders große Anzahl von Werkzeugen auf relativ kleinem Raum aufnehmen können. Darüber hinaus ist ihr Antrieb einfach und genau. Statt der Kettenmagazine können jedoch auch sog. Tellermagazine verwendet werden, die kostengünstiger sind, jedoch nur eine geringere Anzahl von Werkzeugaufnahmen bei gegebenen Platzverhältnissen ermöglichen.

Weitere zweckmäßige Ausgestaltungen des erfindungsgemäßen Werkzeugwagens sind Gegenstand der Unteransprüche.

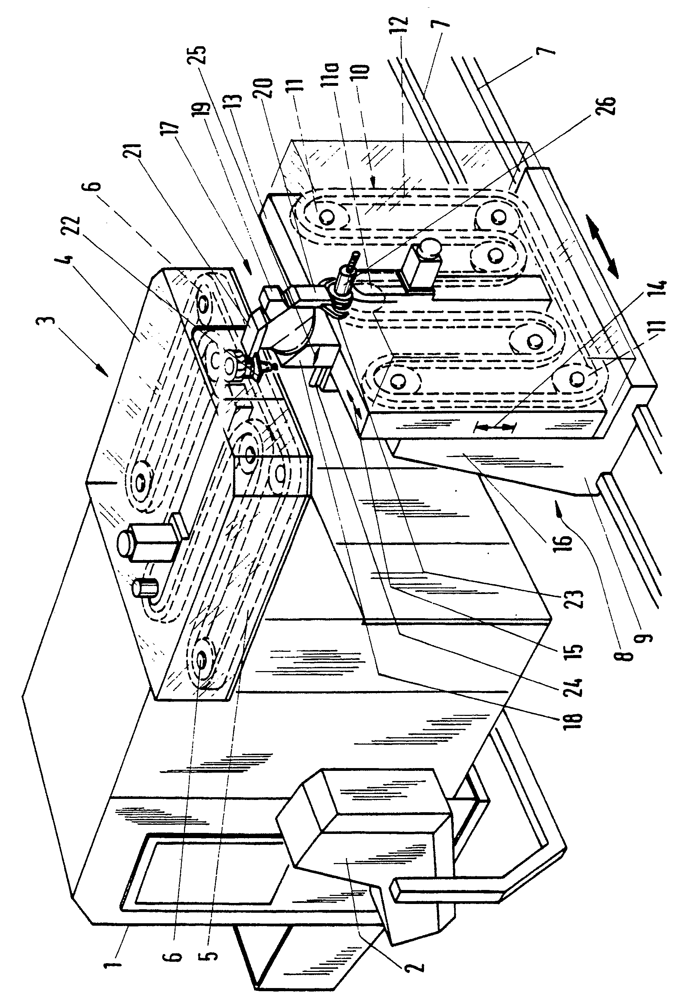

Im folgenden wird ein Ausführungsbeispiel der Erfindung anhand der Zeichnung im einzelnen beschrieben.

Die perspektivische Zeichnung zeigt ein Bearbeitungszentrum zur Fräs-, Bohr- und Drehbearbeitung von Werkstücken in einem vorderen von einer Schutzhaube 1 abgedeckten Arbeitsbereich. Das Bearbeitungszentrum kann an eine programmierbare zentrale Steuereinheit angeschlossen sein und zur Durchführung individueller Arbeiten eine eigene Programmsteuereinheit 2 aufweisen. Im rückwärtigen oberen Teil des Bearbeitungszentrums ist ein in fünf Schlaufen verlegtes Kettenmagazin 3 in einer Schutzhaube 4 angeordnet, dessen Endloskette 5 um insgesamt sieben Kettenräder 6 geführt ist und eine Vielzahl von - in der Zeichnung nicht dargestellten - Werkzeugaufnahmen besitzt, in die bestimmte Werkzeuge mit z. B. ISO-Kegeln eingesetzt werden.

In einem vorbestimmten Abstand zur Rückseite der Maschine bzw. des Kettenmagazins sind Schienen 7 verlegt, auf denen der erfindungsgemäß ausgebildete Werkzeugwagen 8 läuft. Dieser Werkzeugwagen 8 enthält unter einer Kapselung 9 ein - nicht im einzelnen dargestelltes - Fahrgestell und ein Antriebsaggregat, das beispielsweise über im Boden verlegte Induktionsleiter oder über Funk ferngesteuert werden kann. Zur genauen Positionierung und zur Verriegelung des Werkzeugwagens 8 in der dargestellten Wechselposition können im oder auf dem Boden gesonderte Antriebseinrichtungen, wie mit Haken besetzte Endlosketten, Vorschubzylinder od. dgl., verlegt sein, die an bestimmten Mitnehmern des in ihren Wirkungsbereich selbsttätig gefahrenen Wagens angreifen und ihn genau in die dargestellte Wechselposition bringen.

Bei dem dargestellten Werkzeugwagen ist ein Werkzeugspeicher 10 in Form eines in fünf Schleifen verlegten Kettenspeichers vorgesehen, dessen Endloskette 12 über insgesamt sieben Kettenräder 11 läuft, von denen mindestens eines (11a) angetrieben ist. Die Wellen der Kettenräder 11 sind an der vertikalen Seitenfläche eines Schlittens 13 montiert, der in Richtung des Doppelpfeiles 14 in vertikaler Richtung und ggf. auch in Richtung des Doppelpfeiles 15 verschiebbar an der in der Zeichnung vorderseitigen vertikalen Stirnfläche einer formsteifen Tragkonstruktion 16 geführt ist. Mittig auf diesem in Form einer hochkant stehenden Platte ausgeführten Schlitten 13 ist ein Werkzeugwechsler 17 angeordnet, der einen Support 18 aufweist, in dem ein Winkelträger 19 mit zwei rechtwinklig zueinander stehenden Greifarmen 20, 21 und je einem Greifer 22, 23 an jedem Greifarmende gelagert ist. Der Support 18 ist auf einer Führung 24 quer zu den Längsseiten des Schlittens 13 mittels eines nicht dargestellten Antriebs verschiebbar geführt. Der Winkelträger 19 mit den an ihm befestigten Greifarmen 20, 21 ist um eine Schrägachse um jeweils 180° verdrehbar, die senkrecht zur schrägen Stirnfläche 25 des Supports 18 verläuft. Die beiden Greiferarme 20, 21 sowie auch die Greifer 22, 23 sind so ausgelegt, daß bei einer Verdrehbewegung des Winkelträgers 19 und auch bei den Umlaufbewegungen der Kette 12 des Speichers 10 und der Kette 5 des Magazins 3 keine Kollisionen der verschiedenen Bauelemente auftreten. Zu diesem Zweck haben die Greifer einen sehr großen Öffnungsbereich und können weit zurückgeschwenkt werden.

Nicht dargestellte Steuermittel mit entsprechenden Sensoren und Endschaltern sind mit der zentralen Programmsteuerung verbunden, so daß die Antriebe für die verschiedenen bewegbaren Bauelemente über die zentrale Steuereinheit nach bestimmten Programmen betätigt werden können. Zum Wechsel z. B. des in der oberen mittigen Wechselstellung befindlichen Werkzeuges 26 wird der betreffende Stellantrieb für den Greifer 23 betätigt, welcher durch seine Schließbewegung den Werkzeugkegel umgreift. Durch eine Verschiebebewegung des Supports in Richtung des nach außen weisenden Pfeiles 25 wird das Werkzeug 26 aus der entsprechenden Werkzeugaufnahme der Kette 12 herausgezogen. Daraufhin erfolgt eine Verdrehbewegung des Winkelträgers 19 um 180°, so daß sich der Greifarm 20 mit dem Greifer 23 und dem von diesem gehaltenen Werkzeug 26 dann in einer um 180° verschwenkten Position befindet, die in der Zeichnung von dem Greifarm 21 und dem Greifer 22 eingenommen wird. Daraufhin wird der Winkelträger 19 wieder in den Support 18 eingezogen, welcher anschließend in Richtung des zur Maschine weisenden Pfeiles 25 auf der Führung 24 mittels seines Antriebes verfährt. Durch diese Bewegung wird das dann unmittelbar vor einer gewünschten Werkzeugaufnahme stehende Werkzeug 26 in diese Aufnahme hineingeschoben. Nach Öffnen des Greifers kann das Kettenmagazin 3 weiterbewegt werden, bis ein zu wechselndes Werkzeug in der Wechselposition steht. Der Wechselvorgang dieses Werkzeugs, d. h. das Abziehen dieses Werkzeuges aus dem Kettenmagazin 3 und das Einsetzen in den Speicher 10, erfolgt entsprechend der oben beschriebenen Weise.

Ein besonderer Vorteil der vorstehend beschriebenen Ausführung liegt darin, daß der Kettenspeicher 10 und auch der Schlitten 13 konstruktiv mit dem Kettenmagazin 3 der Werkzeugmaschine gleich ausgeführt sind, so daß ein solches Kettenmagazin auch als Werkzeugspeicher ohne größere Umrüstarbeiten an einem Transportwagen eingesetzt werden kann.

Die Erfindung ist jedoch nicht auf die vorstehend beschriebene Ausführung beschränkt. So kann statt eines Kettenmagazins auch ein Tellermagazin mit eigenem Antrieb an der Tragkonstruktion 16 oder an anderen geeigneten Traggestellen des Werkzeugwagens montiert werden. Darüber hinaus sind auch andere Magazintypen, beispielsweise in Form von Paternostern mit zwei umlaufenden Endlosketten und dazwischen montierten Trägern mit einer Reihe von Werkzeugaufnahmen,möglich.

## Ansprüche

1. Werkzeugwagen (8) für die Beschickung der Werkzeugmagazine (3) von numerisch gesteuerten Werkzeugmaschinen, insbesondere von in ein flexibles Fertigungssystem integrierten Bearbeitungszentren, bestehend

   aus einem mehrspurigen Fahrgestell mit einem numerisch gesteuerten Fahrantrieb und mit einer Vertikalen plattenförmigen Tragkonstruktion (16),

   aus einem an der Tragkonstruktion (16) Hochkant montierten und gesondert angetriebenen Werkzeugspeicher (10) mit Werkzeugaufnahmen und

   aus einem Werkzeugwechsler (17) mit bewegbaren Greifarmen (20, 21) zur Übergabe eines ausgewählten Werkzeugs (26) aus dem Werkzeugspeicher (10) an das Werkzeugmagazin (3) der Werkzeugmaschine - und umgekehrt -,

   **dadurch gekennzeichnet,**

   daß an einer vertikalen längsverlaufenden Seitenwand der Tragkonstruktion (16) ein plattenförmiger Schlitten (13) motorisch vertikal bewegbar in flächiger Anlage angeordnet ist, welcher an seiner vertikalen der Tragkonstruktion (16) abgewandten Außenseite den Werkzergspeicher (10) und an seiner horizontalen Oberseite den Werkzeugwechsler (17) trägt, und

   daß der Werkzeugwechsler (17) einen auf dem Schlitten (13) horizontal quer zur Fahrtrichtung des Werkzeugwagens verschiebbaren Support (18) und einen um eine Schrägachse verdrehbaren Winkelträger (19) mit zwei diametral gegenüberliegenden Greifarmen (20, 21) aufweist.

2. Werkzeugwagen nach Anspruch 1, dadurch gekennzeichnet,

daß der Werkzeugspeicher (10) eine über ein Kettenrad (11) angetriebene Endloskette (12) mit den Werkzeugaufnahmen enthält, die an der äußeren Seitenwand des Schlittens (13) in mehreren Schleifen angeordnet ist, wobei ein mittleres oberes angetriebenes Kettenrad (11a) die Werkzeugwechselposition definiert.

3. Werkzeugwagen nach Anspruch 1, dadurch gekennzeichnet, daß der Werkzeugspeicher in Form eines Tellermagazins mit eigenem Antrieb ausgebildet ist.

## Claims

1. Tool carriage (8) for loading the tool magazines (3) of numerically controlled machine tools, in particular of machining centres which are incorporated in a flexible production system, consisting of a multitrack underframe with a numerically controlled traversing drive and a vertical plate-like supporting structure (16), of a tool-storage unit (10), which is mounted in an upright position on the supporting structure (16), is separately driven and comprises tool holders, and of a tool-change device (17) with mobile gripper arms (20, 21) to deliver a selected tool (26) from the tool-storage unit (10) to the tool magazine (3) of the machine tool - and vice versa -, characterised in that a plate-like slide (13) is arranged flatly against a vertical side wall, extending in the longitudinal direction, of the supporting structure (16) such that it can be moved in the vertical direction by a motor and bears the tool-storage unit (10) at its vertical outer surface which is distant from the supporting structure (16) and the tool-change device (17) at its horizontal upper side, and that the tool-change device (17) comprises a rest (18), which can be displaced on the slide (13) in the horizontal direction transversely to the direction of travel of the tool carriage, and an angle support (19), which can be turned about an oblique axis and comprises two diametrically opposite gripper arms (20, 21).

2. Tool carriage according to claim 1, characterised in that the tool-storage unit (10) comprises an endless chain (12) with the tool holders, which chain is driven by a sprocket wheel (11) and is arranged in several loops at the outer side wall of the slide (13), a central upper driven sprocket wheel (11a) defining the tool-change position.

3. Tool carriage according to claim 1, characterised in that the tool-storage unit is in the form of a disk magazine with its own drive.

**Revendications**

1. Chariot support d'outils (8) destiné au chargement des magasins d'outils (3) de machines-outils à commande numérique, notamment de centres d'usinage intégrés dans un atelier flexible, et composé

d'un châssis multi-traces comportant un entrainement de déplacement à commande numérique et un ensemble porteur vertical (16) en forme de plaque,

d'une réserve d'outils (10) avec des logements d'outils, montée verticalement sur chant sur l'ensemble porteur (16) et entraînée séparément, et

d'un changeur d'outils (17) comportant des bras de préhension mobiles (20,21) pour le transfert d'un outil (26) sélectionné, de la réserve d'outils (10) vers le magasin d'outils (3) de la machine-outil, et inversement,

**caractérisé**

en ce que sur une paroi latérale verticale s'étendant en direction longitudinale, de l'ensemble porteur (16), est disposé un coulisseau (13) en forme de plaque, qui est en appui plan et mobile en direction verticale de manière motorisée, et qui porte la réserve d'outils (10) sur son côté extérieur vertical opposé à celui qui est adjacent à l'ensemble porteur (16), ainsi que le changeur d'outils (17) sur son côté supérieur horizontal, et

en oe que le changeur d'outils (17) comporte une coulisse (18) pouvant coulisser en direction horizontale sur le coulisseau (13), transversalement à la direction de déplacement du chariot support d'outils, ainsi qu'un support coudé (19) pouvant tourner autour d'un axe incliné et portant deux bras de préhension (20,21) diamétralement opposés.

2. Chariot support d'outils selon la revendication 1, caractérisé

en ce que la réserve d'outils (10) possède une chaîne sans fin (12) avec les logements d'outils, qui est entraînée par l'intermédiaire d'une roue dentée (11) et qui est disposée sur la paroi latérale extérieure du coulisseau (13) en formant plusieurs boucles, une roue dentée supérieure (11a) en position centrale et entraînée, définissant la position de changement d'outil.

3. Chariot support d'outils selon la revendication 1, caractérisé

en ce que la réserve d'outils se présente sous la forme d'un magasin à disque avec son propre entrainement.